# FASCICULE DE BREVET EUROPEEN

(11) **EP 3 304 728 B1**
(45) Date de publication et mention de la délivrance du brevet: **28.07.2021**
(21) Numéro de dépôt: 15731662.1
(22) Date de dépôt: 26.05.2015
(51) Int. Cl.: H02S 40/34, H02S 40/36, H02S 20/25

(54) **DISPOSITIF DE CONNEXION ÉLECTRIQUE D'INSTALLATION PHOTOVOLTAÏQUE**
ELEKTRISCHE VERBINDUNGSVORRICHTUNG FÜR EIN PHOTOVOLTAIKSYSTEM
DISPOSITIF DE CONNEXION ELECTRIQUE D'INSTALLATION PHOTOVOLTAIQUE

(43) Date de publication de la demande: 11.04.2018
(73) Titulaire: Arcelormittal, 1160 Luxembourg (LU)
(72) Inventeur: VIGNAL, Renaud, 74320 Sévrier (FR); GERON, Laurent, 4632 Cerexhe-Heuseux (BE); FOURDRINIER, Lionel, 1060 Saint-Gilles (BE)
(74) Mandataire: Lavoix
(86) Numéro de dépôt international: PCT/IB2015/000754
(87) Numéro de publication internationale: WO 2016/189342

(56) Documents cités:
- EP-A2- 2 600 078
- WO-A1-2008/000101
- WO-A2-2009/090347
- US-A1- 2009 114 263
- None

## Description

La présente invention concerne un boitier de connexion électrique pour panneau de parement extérieur de bâtiment porteur d'au moins un module photovoltaïque. Un tel panneau est destiné principalement à la réalisation de toitures photovoltaïques sans toutefois y être limité.

Il est connu de réaliser les couvertures de toit avec des panneaux nervurés, par exemple en acier galvanisé prélaqué, dont les bords se chevauchent pour assurer l'étanchéité de la toiture.

Il est par ailleurs connu, notamment de WO2009090347, de rapporter sur la couverture des bâtiments des modules photovoltaïques. Il peut s'agir notamment de modules sous forme de rubans souples collés sur la surface des creux d'onde du panneau nervuré. Dans le futur, il pourrait aussi s'agir de dispositifs photovoltaïques réalisés directement sur la surface des creux d'onde du panneau nervuré notamment par des procédés de dépôt sous vide ou à pression atmosphérique. Ces modules sont reliés entre eux par un réseau de câbles de préférence majoritairement situés en face envers de la couverture de sorte à éviter la dégradation prématurée des câbles et à préserver l'esthétique du bâtiment.

Une telle disposition présente cependant l'inconvénient de nécessiter d'avoir accès à la sous-toiture pour assurer le raccordement, en face arrière des panneaux nervurés, de deux modules successifs.

Il est connu de JP10102708 d'éviter l'utilisation des câbles en ayant recours, d'une part, à un connecteur électrique mâle situé au voisinage de l'extrémité inférieure du panneau et en face envers et, d'autre part, à un connecteur électrique femelle situé au voisinage de l'extrémité supérieure du panneau et en face supérieure. Lors de l'assemblage de deux panneaux de toiture adjacents longitudinalement, le connecteur électrique mâle du panneau supérieur est inséré dans le connecteur électrique femelle du panneau inférieur, ce qui connecte électriquement le module photovoltaïque du panneau supérieur au module photovoltaïque du panneau inférieur.

Une telle disposition ne permet cependant pas d'ajuster le schéma de câblage de l'installation photovoltaïque en cas d'accidents de toiture, tels que, par exemple, une souche de cheminée, une douille de ventilation, une chatière, une lucarne, une trappe d'accès. Le recours à des câbles électriques pour contourner l'accident de toiture n'est en effet pas compatible avec les connecteurs électriques mâle et femelle.

Il est également connu de WO2008000101 un boitier de connexion destiné au câblage de cellules solaires d'un module photovoltaïque et comprenant un logement et un couvercle. Un tel boitier ne permet cependant pas de faciliter le câblage des modules photovoltaïques entre eux.

La présente invention a pour but de pallier aux problèmes précités en proposant un boitier de connexion électrique facilitant l'assemblage des panneaux et le câblage des modules photovoltaïques.

A cet effet, l'invention a pour premier objet un boitier de connexion électrique pour panneau de parement extérieur de bâtiment porteur d'au moins un module photovoltaïque comprenant un pôle électrique à l'une de ses extrémités longitudinales et un pôle électrique de polarité inverse à l'autre extrémité, le boitier de connexion comprenant :
- un fond,
- une paroi latérale entourant le fond et s'étendant perpendiculairement à celui-ci, la paroi latérale comprenant, sur sa face externe, un rebord périphérique destiné au maintien du boitier en place dans une ouverture pratiquée dans le panneau de parement extérieur,
- une sortie de câble, située dans la partie du boitier de connexion se trouvant au-dessus du rebord périphérique, destinée à relier le boitier de connexion électrique à un pôle électrique du module photovoltaïque porté par le panneau,
- une cavité interne délimitée par le fond et la paroi, comprenant une borne électrique d'axe perpendiculaire au fond, destinée au branchement d'une fiche électrique située en face envers d'un panneau de parement extérieur adjacent,
- un interrupteur électrique amovible reliant la borne électrique à la sortie de câble et situé sur la paroi latérale du boitier de connexion.

Le boitier de connexion selon l'invention peut également comprendre les caractéristiques optionnelles suivantes, prises isolément ou en combinaison :
- le rebord périphérique est situé dans le tiers supérieur de la paroi latérale,
- le rebord périphérique est continu sur la périphérie de la paroi latérale,
- la sortie de câble est adjacente au rebord périphérique,
- la sortie de câble se présente sous la forme d'une borne électrique apte au branchement d'une fiche électrique,
- l'interrupteur électrique amovible comprend un conducteur électrique muni de deux extrémités, chacune des extrémités étant en contact électrique avec respectivement la borne électrique et la sortie de câble,
- la borne électrique et la sortie de câble sont chacune en contact électrique avec une prise électrique, les deux prises électriques étant rendues accessibles par le retrait de l'interrupteur électrique amovible du boitier de connexion.

Un second objet de l'invention est constitué par un panneau de parement extérieur de bâtiment comprenant :
- un bord transversal supérieur comprenant une zone de recouvrement supérieure destinée à être recouverte par un panneau adjacent,
- un bord transversal inférieur comprenant une zone de recouvrement inférieure destinée à recouvrir un panneau adjacent,
- une partie centrale, reliant les bords transversaux, recouverte d'au moins un module photovoltaïque comprenant un pôle électrique à l'une de ses extrémités longitudinales et un pôle électrique de polarité inverse à l'autre extrémité,
- un percement situé dans la zone de recouvrement inférieure et traversé par un câble électrique reliant l'un des deux pôles électriques du module photovoltaïque à une fiche électrique située en face envers du panneau dans la zone de recouvrement inférieure,
- une ouverture, située dans la zone de recouvrement supérieure, dans laquelle est inséré un boitier de connexion électrique relié à l'autre pôle électrique du module photovoltaïque par l'intermédiaire d'un câble électrique, le boitier de connexion comprenant :
   ∘ un fond,
   ∘ une paroi latérale entourant le fond et s'étendant perpendiculairement à celui-ci, la paroi latérale comprenant, sur sa face externe, un rebord périphérique pour le maintien du boitier en place dans l'ouverture,
   ∘ une sortie de câble, située dans la partie du boitier de connexion se trouvant au-dessus du rebord périphérique, pour relier le boitier de connexion électrique à l'autre pôle électrique du module photovoltaïque,
   ∘ une cavité interne délimitée par le fond et la paroi, comprenant une borne électrique d'axe perpendiculaire au fond, destinée au branchement d'une fiche électrique située en face envers d'un panneau de parement extérieur adjacent,
   ∘ un interrupteur électrique amovible reliant la borne électrique à la sortie de câble et situé sur la paroi latérale du boitier de connexion.

Le panneau selon l'invention peut également comprendre la caractéristique optionnelle selon laquelle il comprend un renfoncement entourant l'ouverture.

D'autres caractéristiques et avantages de l'invention apparaitront à la lecture de la description qui va suivre.

Afin d'illustrer l'invention, des essais ont été réalisés et vont être décrits à titre d'exemples non limitatifs, notamment en référence aux figures qui représentent :
L'invention sera mieux comprise à la lecture de la description qui suit, donnée à titre explicatif mais non limitatif, en référence aux figures annexées qui représentent :
- La figure 1 est une vue en perspective d'un panneau de parement extérieur de bâtiment porteur d'au moins un module photovoltaïque,
- La figure 2 est une vue en perspective de la partie supérieure du panneau de la figure 1,
- La figure 3 est une vue en perspective de la partie inférieure du panneau de la figure 1,
- La figure 4 est une vue en perspective d'un panneau de parement extérieur de bâtiment porteur d'au moins un module photovoltaïque,
- La figure 5 est une vue en perspective de la face envers de la partie inférieure du panneau de la figure 4,
- La figure 6 est une vue en perspective d'un boitier de connexion électrique selon un premier mode de réalisation,
- La figure 7 est une vue en perspective d'un interrupteur électrique amovible,
- La figure 8 est une vue en perspective d'un boitier de connexion électrique,
- La figure 9 est une vue en coupe schématique d'une toiture comprenant deux panneaux de parement extérieur de bâtiment porteurs d'au moins un module photovoltaïque,
- La figure 10 est une vue en perspective d'un boitier de connexion électrique selon un second mode de réalisation.

Les mêmes numéros de référence représentent les mêmes éléments dans chacune des figures.

Dans l'ensemble du texte, on entendra par panneau un élément de forme plate, c'est-à-dire de faible épaisseur comparée à ses autres dimensions. Le panneau peut se présenter sous la forme d'une plaque ou d'une feuille constituée d'un matériau unique ou d'un assemblage composite. Dans ce dernier cas, le panneau est une superposition de plusieurs couches du même matériau ou de matériaux différents. Le matériau en question peut être, entre autre, un matériau métallique, un polymère ou encore une céramique. On pourra citer à titre d'exemple non limitatif de matériaux métalliques l'acier, l'aluminium, le cuivre, le zinc. De préférence le panneau est une tôle métallique. De préférence, il s'agit d'acier préalablement galvanisé et prélaqué afin de le protéger de la corrosion. Le panneau peut optionnellement être moussé en face inférieure et ainsi constituer le parement extérieur d'un panneau sandwich.

Dans le cadre de l'invention, le panneau aura été de préférence préalablement mis en forme au moyen de tout procédé connu de mise en forme parmi lesquels on citera à titre d'exemple non limitatif le pliage, le profilage, l'emboutissage, le moulage.

Pour former un parement extérieur de bâtiment, tel qu'une toiture ou une façade, les panneaux sont assemblés par recouvrement marginal de leurs bords longitudinaux et de leurs bords transversaux et fixés à la structure porteuse du bâtiment par l'intermédiaire de moyens de fixation tels que des vis, des clous ou encore des rivets.

Dans la suite de la description, pour faciliter la compréhension de l'invention, il sera fait seulement référence à une toiture, bien que l'invention puisse être utilisée pour tout parement extérieur de bâtiment.

Dans l'ensemble du texte, on entendra par module photovoltaïque, un ensemble de cellules photovoltaïques reliées entre elles, de préférence en série, et isolées de l'extérieur par une barrière protectrice. Il peut s'agir, à titre d'exemple non limitatif, d'un module sous forme de ruban souple collé sur la partie centrale du panneau ou d'un module réalisé directement sur la partie centrale du panneau par dépôts successifs de couches de natures appropriées par des procédés de dépôt sous vide ou à pression atmosphérique.

Au sein de chaque module photovoltaïque, la disposition et l'organisation des cellules photovoltaïques n'est pas limitative. A titre d'exemple non limitatif, les cellules peuvent être disposées les unes sous les autres en une unique rangée ou peuvent être disposées en plusieurs rangées, les rangées étant reliées les unes aux autres de sorte à former une sorte de ruban plié. De préférence, et afin de faciliter la réalisation, directement sur le panneau, de modules photovoltaïques par des procédés de dépôt sous vide ou à pression atmosphérique, les cellules sont disposées en une unique rangée.

Dans le cadre de l'invention, le module photovoltaïque comprend un pôle électrique à l'une de ses extrémités longitudinales et un pôle électrique de polarité inverse à l'autre extrémité.

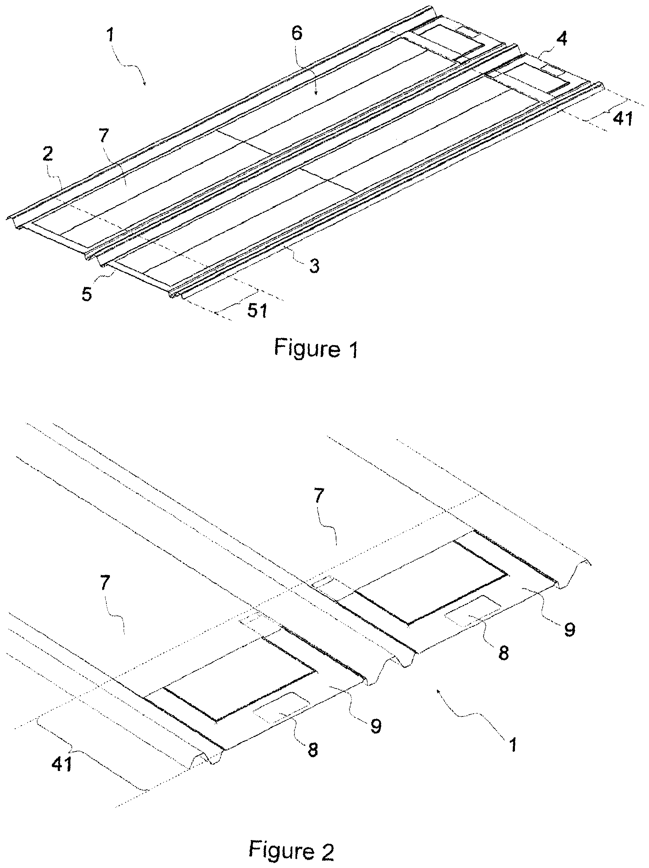

En référence à la figure 1, le panneau 1 de parement extérieur de bâtiment est principalement constitué d'un premier bord longitudinal 2, d'un second bord longitudinal 3, d'un bord transversal supérieur 4, d'un bord transversal inférieur 5, les quatre bords étant reliés par une partie centrale 6 recouverte d'au moins un module photovoltaïque 7.

Le bord transversal supérieur 4 comprend une zone de recouvrement supérieure 41 destinée à être recouverte par un panneau adjacent lors de l'assemblage de la toiture. Cette zone de recouvrement supérieure a généralement une largeur comprise entre 150 et 500mm en fonction, entre autre, de la pente du toit.

Le bord transversal inférieur 5 comprend une zone de recouvrement inférieure 51 destinée à recouvrir un panneau adjacent lors de l'assemblage de la toiture. Cette zone de recouvrement inférieure a généralement une largeur comprise entre 150 et 500mm en fonction, entre autre, de la pente du toit.

En référence à la figure 2, la zone de recouvrement supérieure 41 du panneau 1 comprend une ouverture 8 destinée à l'encastrement d'un boitier de connexion électrique. Les dimensions de l'ouverture sont adaptées au boitier de connexion électrique prévu à cet effet. En particulier, les dimensions sont ajustées en tenant compte des dilatations thermiques et des charges pouvant s'exercer sur le panneau lors de son utilisation.

L'ouverture 8 peut être obtenue par toute technique de découpe connue de l'homme du métier, parmi lesquelles, on pourra citer, à titre d'exemples non limitatifs, le poinçonnage, le fraisage, la découpe mécanique, la découpe laser, la découpe à l'eau, l'oxycoupage.

De préférence, la zone de recouvrement supérieure 41 du panneau 1 comprend également un renfoncement 9 entourant l'ouverture 8. Ce renfoncement permet d'abaisser le boitier de connexion comparativement au pourtour du renfoncement et d'intégrer les câbles électriques reliant le boitier de connexion au module photovoltaïque 7. En ajustant les dimensions respectives du renfoncement, du boitier de connexion et des câbles électriques, il est ainsi possible de recouvrir de façon jointive la zone de recouvrement supérieure 41 par la zone de recouvrement inférieure 51 d'un panneau adjacent. Ceci favorise l'étanchéité de l'assemblage de deux panneaux adjacents.

Le renfoncement 9 peut être obtenu par emboutissage du panneau ou par toute autre technique de mise en forme connue de l'homme du métier et adaptée à la situation.

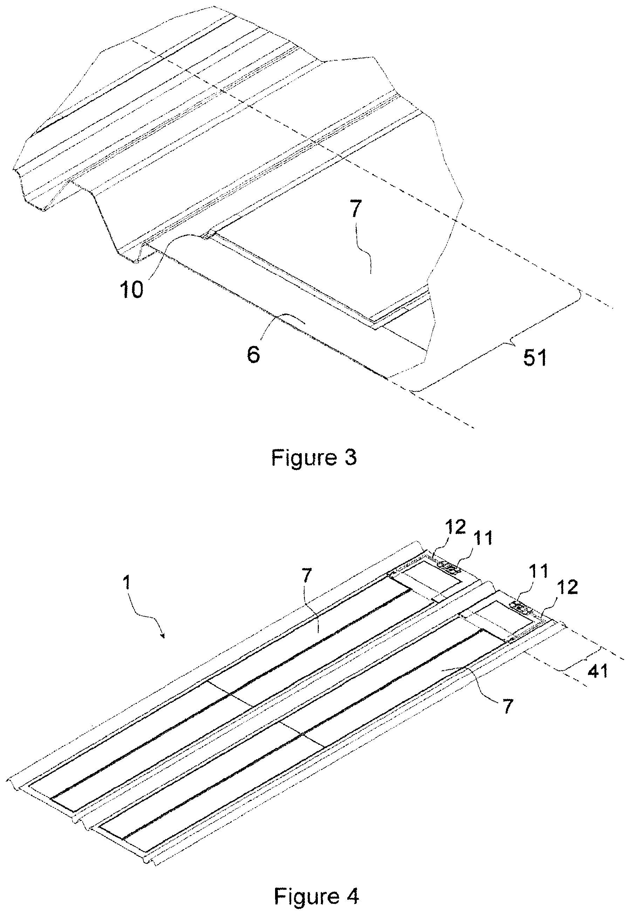

En référence à la figure 3, la zone de recouvrement inférieure 51 comprend un percement 10, c'est-à-dire une ouverture pratiquée dans l'épaisseur du panneau. Le percement 10 permet de faire passer en face arrière du panneau un câble électrique relié au module photovoltaïque 7.

Le percement 10 peut être obtenu par toute technique de découpe connue de l'homme du métier, parmi lesquelles, on pourra citer, à titre d'exemples non limitatifs, le poinçonnage, le fraisage, la découpe mécanique, la découpe laser, la découpe à l'eau, l'oxycoupage.

En référence à la figure 4, le panneau 1 comprend également un boitier de connexion 11 inséré dans l'ouverture 8 pratiquée dans le panneau 1 dans la zone de recouvrement supérieure 41. Le boitier de connexion 11 est relié au module photovoltaïque 7, et en particulier à son pôle électrique situé à son extrémité supérieure, par l'intermédiaire d'un câble électrique 12.

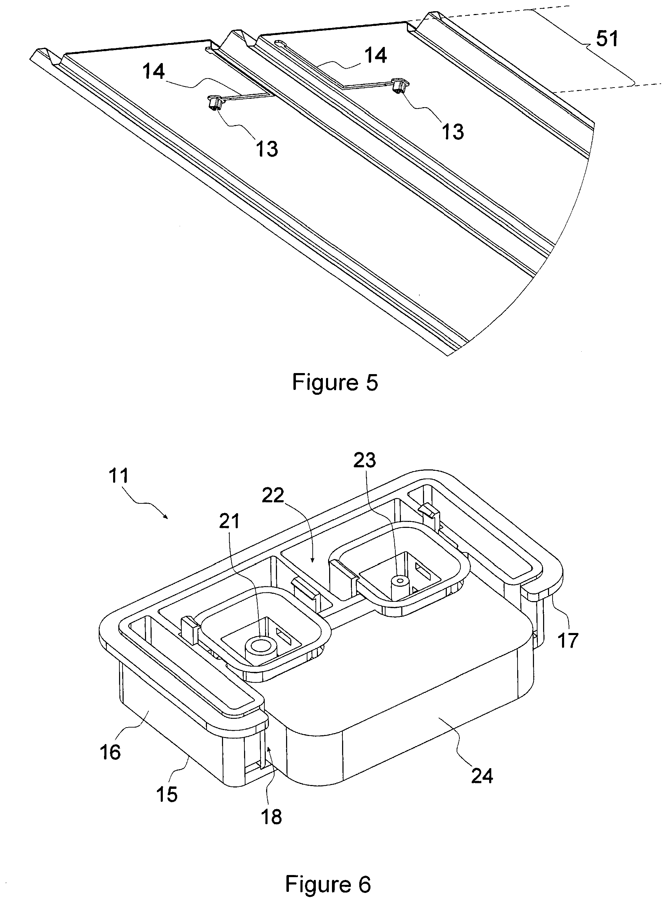

En référence à la figure 5, le panneau 1 comprend également une fiche électrique 13 située en face envers du panneau dans la zone de recouvrement inférieure 51. La fiche électrique 13 est reliée au module photovoltaïque 7 (non visible sur la figure 5), et en particulier à son pôle électrique situé à son extrémité inférieure, par l'intermédiaire d'un câble électrique 14. Le câble électrique 14 traverse le panneau 1 au niveau du percement 10 (non visible sur la figure).

La fiche électrique 13 est destinée à être branchée sur le boitier de connexion d'un panneau 1 adjacent, lorsque la zone de recouvrement inférieure 51 du panneau porteur de la fiche électrique recouvre la zone de recouvrement supérieure 41 du panneau adjacent. De la sorte, les modules photovoltaïques portés par ces deux panneaux sont reliés électriquement.

En référence à la figure 6, on décrit le boitier de connexion 11 selon un premier mode de réalisation.

Le boitier de connexion comprend, tout d'abord, un fond 15 bordé par une paroi latérale 16 qui s'élève perpendiculairement au fond.

De préférence, le fond 15 ne comprend aucune ouverture afin de faciliter la bonne étanchéité à l'eau du boitier de connexion.

De préférence, le fond 15 est plat afin de minimiser l'encombrement du boitier de connexion et permettre sa bonne insertion au niveau de la zone de recouvrement entre deux panneaux de parement extérieur adjacents.

Selon la variante illustrée, la paroi latérale 16 est de section rectangulaire et est donc formée de quatre cotés latéraux de paroi. Dans le cadre de l'invention, d'autres sections de paroi sont cependant envisageables.

Le fond et la paroi latérale sont, de préférence, réalisés en matériau isolant, par exemple par moulage d'une matière synthétique, en particulier en plastique.

La paroi latérale 16 comprend, sur sa face externe, un rebord périphérique 17.

Le rebord périphérique 17 permet d'appuyer le boitier de connexion en butée sur le panneau de parement extérieur lorsque le boitier, et en particulier la paroi latérale, est inséré dans l'ouverture 8 pratiquée dans le panneau de parement extérieur.

De préférence, le rebord périphérique 17 est constitué d'un bourrelet de la même matière que la paroi latérale du boitier de connexion. Le rebord peut ainsi être fabriqué en même temps que la paroi latérale, par exemple par moulage.

De préférence, le rebord périphérique 17 est situé dans le tiers supérieur de la paroi latérale, et plus préférentiellement au niveau du bord supérieur de la paroi latérale, de sorte que le boitier de connexion dépasse le moins possible en face supérieur du panneau de parement extérieur. Une telle configuration permet d'assurer un bon recouvrement de deux panneaux de parement extérieur adjacents longitudinalement.

De préférence, le rebord périphérique 17 est continu sur la périphérie de la paroi latérale. Ceci permet de faciliter la réalisation de l'étanchéité à l'eau entre le boitier de connexion et le panneau de parement extérieur. Il est cependant possible de prévoir un rebord périphérique discontinu si une bonne étanchéité n'est pas nécessaire à ce niveau.

Pour ces mêmes raisons d'étanchéité à l'eau, il est possible de prévoir, en face inférieure du rebord périphérique, un joint d'étanchéité. Ce joint sera écrasé entre le boitier et le panneau lors de la mise en place du boitier sur le panneau. Ce joint d'étanchéité peut être constitué d'une colle assurant le collage du boitier de connexion sur le panneau de parement extérieur.

En référence à la figure 6, le fond 15 et la paroi latérale 16 définissent une cavité intérieure 22.

La cavité intérieure 22 comprend une borne électrique 23 d'axe perpendiculaire au fond.

La borne électrique 23 permet de relier électriquement le boitier de connexion d'un premier panneau 1 à la fiche électrique 13 d'un deuxième panneau 1 lors de l'assemblage de deux panneaux adjacents. En particulier, lorsque la zone de recouvrement inférieure 51 du panneau supérieur est placée sur la zone de recouvrement supérieure 41 du panneau inférieur, par un mouvement de translation perpendiculaire au plan des panneaux, la borne électrique 23 du boitier de connexion du panneau inférieur et la fiche électrique 13 du panneau supérieur s'emboitent.

La borne électrique 23 peut être indifféremment une borne mâle ou une borne femelle. Le genre de la fiche électrique 13 sera simplement ajusté en conséquence.

L'homme du métier saura ajuster la géométrie et les dimensions respectives de la borne électrique 23 et de la fiche électrique 13 de sorte à assurer une bonne connexion électrique et une bonne étanchéité à l'eau après emboitement de la borne électrique 23 et de la fiche électrique 13.

La cavité intérieure 22 peut être partiellement fermée par un couvercle (non représenté) fermant la cavité à l'exception de l'extrémité supérieure de la borne électrique 23.

En référence à la figure 6, le boitier de connexion comprend, par ailleurs, une sortie de câble 21 située dans la partie du boitier de connexion se trouvant au-dessus du rebord périphérique 17, autrement dit dans la partie du boitier accessible depuis la face supérieure du panneau 1 une fois que le boitier de connexion 11 est inséré dans l'ouverture 8 du panneau.

Cette sortie de câble 21 permet de relier le pôle électrique supérieur du module photovoltaïque au boitier de connexion par l'intermédiaire du câble électrique 12.

Le fait que la sortie de câble 21 soit située dans la partie du boitier de connexion se trouvant au-dessus du rebord périphérique 17 permet d'éviter que le panneau 1 ne soit percé pour permettre le passage du câble électrique 12.

Selon une variante de l'invention, la sortie de câble 21 est adjacente au rebord périphérique. Cette disposition permet au câble électrique 12 d'affleurer le panneau 1. Le câble peut ainsi être collé sur le panneau et son faible encombrement facilite le recouvrement du panneau par un panneau adjacent.

Selon la variante illustrée de l'invention, la sortie de câble 21 se présente sous la forme d'une borne électrique, d'axe perpendiculaire au fond, située dans la cavité intérieure 22. Cette borne électrique est apte au branchement d'une fiche électrique disposée à l'extrémité du câble électrique 12 destiné à relier le pôle électrique supérieur du module photovoltaïque 7 au boitier de connexion 11. La borne électrique peut être indifféremment une borne mâle ou une borne femelle. Le genre de la fiche électrique du câble électrique 12 sera simplement ajusté en conséquence.

Alternativement, la sortie de câble 21 permet le passage d'un câble électrique directement connecté à l'intérieur du boitier de connexion.

En référence à la figure 6, le boitier de connexion 11 comprend par ailleurs un interrupteur électrique amovible 24 situé sur la paroi latérale du boitier de connexion.

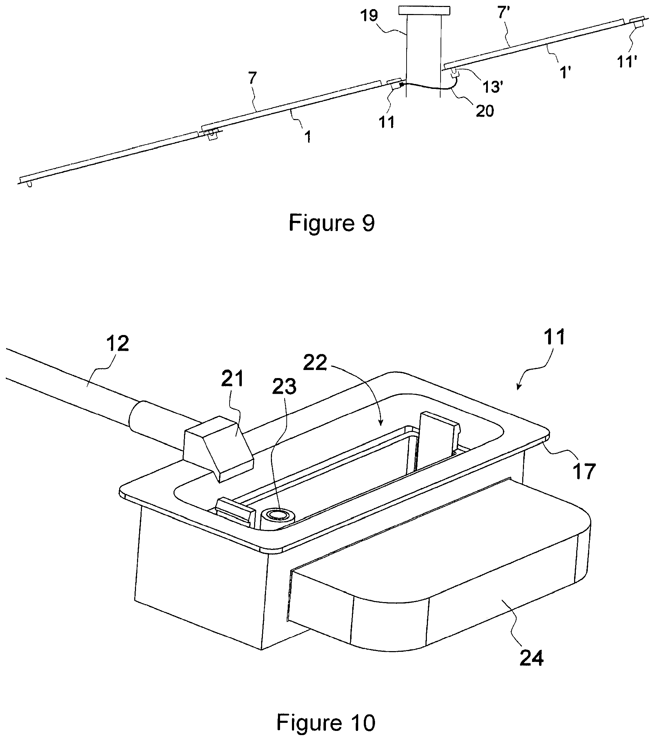

L'interrupteur électrique amovible 24 relie, par défaut, la borne électrique 23 à la sortie de câble 21 et permet d'ouvrir le circuit électrique entre la borne électrique 23 et la sortie de câble 21. En cas d'ouverture du circuit électrique, la connexion électrique entre deux modules photovoltaïques 7 portés par deux panneaux 1 adjacents n'est plus possible. En revanche, il est alors possible de relier électriquement des modules photovoltaïques portés par des panneaux distants par l'intermédiaire d'un câble électrique additionnel, comme cela sera détaillé ultérieurement à l'appui de la figure 9.

L'interrupteur électrique amovible 24 est situé sur la paroi latérale du boitier de connexion, de préférence sur le coté latéral de paroi destiné à être orienté vers le bord transversal supérieur 4 du panneau. Il est ainsi facile d'accès lorsque le boitier de connexion est inséré dans le panneau 1, lui-même mis en place sur la toiture. En effet, l'opérateur n'a alors pas besoin d'avoir accès à la sous-toiture pour accéder à l'interrupteur électrique amovible. L'accès au bord transversal supérieur 4 du panneau 1 lui suffit pour accéder à l'interrupteur.

En fonction de la profondeur du renfoncement 9 et/ou de la position du rebord périphérique 17, l'interrupteur électrique pourra être situé au-dessus ou en-dessous du rebord périphérique.

De préférence, l'interrupteur électrique amovible 24 est inséré dans une ouverture 18 pratiquée dans la paroi latérale du boitier de connexion. Une partie de l'interrupteur électrique amovible dépasse de la paroi latérale. Il est alors facile de prendre en main l'interrupteur électrique amovible et de le retirer du boitier de connexion en tirant dessus.

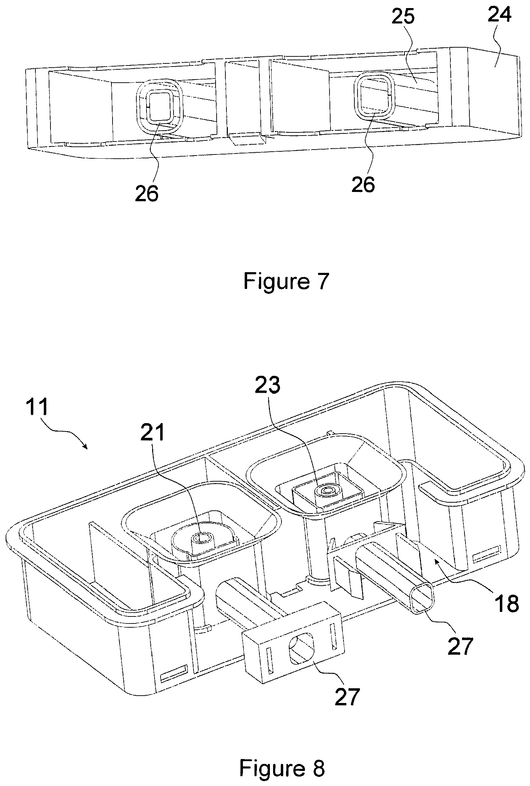

En référence à la figure 7, l'interrupteur électrique amovible 24 se présente sous la forme d'une pièce approximativement parallélépipédique rectangle dont un coté latéral est ouvert de sorte à donner accès à la structure creuse de la pièce. L'intérieur de la pièce comprend un conducteur électrique 25 muni de deux extrémités 26 affleurant le coté latéral ouvert.

Lorsque l'interrupteur électrique amovible 24 est inséré dans le boitier de connexion, le conducteur électrique 25 permet d'assurer la liaison électrique entre la borne électrique 23 et la sortie de câble 21, chacune des extrémités 26 étant en contact électrique avec respectivement la borne électrique 23 et la sortie de câble 21.

En référence à la figure 8, le retrait de l'interrupteur électrique amovible 24 du boitier de connexion donne accès à deux prises électriques 27. Chacune des prises électriques 27 est en contact électrique avec respectivement la borne électrique 23 et la sortie de câble 21.

Cet interrupteur électrique amovible permet d'ajuster le schéma de câblage de l'installation photovoltaïque en fonction des accidents de toiture. En effet, comme illustré à la figure 9, en cas d'accident de toiture, tel qu'une souche de cheminée 19, le module photovoltaïque 7 porté par le panneau 1 adjacent à l'accident de toiture ne peut pas être relié électriquement au panneau 1' situé au delà de l'accident de toiture par simple emboitement de la fiche électrique 13' du panneau 1' dans le boitier de connexion 11 du panneau 1. Par retrait de l'interrupteur électrique amovible, il est alors possible de brancher électriquement une extrémité d'un câble électrique 20 sur le boitier de connexion du panneau 1 adjacent à l'accident de toiture. L'autre extrémité du câble électrique 20 est branchée sur la fiche électrique 13' du panneau 1'- situé au delà de l'accident de toiture.

Plus particulièrement, le retrait de l'interrupteur électrique amovible donne accès à la prise électrique 27 reliée électriquement à la sortie de câble 21, elle-même reliée électriquement au module photovoltaïque 7 porté par le panneau 1 par l'intermédiaire du câble électrique 12. En branchant le câble électrique 20 sur cette prise électrique 27, on relie électriquement le module photovoltaïque 7 à la suite de l'installation photovoltaïque, et en particulier au module photovoltaïque 7' porté par le panneau 1' et relié électriquement à la fiche électrique 13'.

De part la position de l'interrupteur électrique amovible 24, le câble électrique 20 utilisé se trouve en sous-face des panneaux 1. Ceci permet d'éviter la dégradation prématurée du câble et de préserver l'esthétique du bâtiment.

Le retrait de l'interrupteur électrique amovible 24 permet alternativement de connecter sur le boitier de connexion d'autres dispositifs électroniques qui vont permettent, par exemple, de fonctionnaliser le boitier de connexion. Il peut s'agir, à titre d'exemples non limitatifs, d'un contrôle électronique, d'un micro-convertisseur,...

En référence à la figure 10, on décrit le boitier de connexion 11 selon un second mode de réalisation.

Le boitier de connexion 11 selon ce second mode de réalisation comprend l'ensemble des caractéristiques du boitier de connexion selon le premier mode de réalisation à l'exception des caractéristiques décrites ci-dessous.

Selon ce mode de réalisation, la sortie de câble 21 se présente sous la forme d'un plot, adjacent au rebord périphérique 17, dans lequel le câble électrique 12 est enfiché. Cette disposition permet au câble électrique 12 d'affleurer le panneau 1. Le câble peut ainsi être collé sur le panneau et son faible encombrement facilite le recouvrement du panneau par un panneau adjacent.

La cavité intérieure 22 est ouverte et ne comprend que la borne électrique 23. Lors de l'assemblage des panneaux 1, la borne électrique 23 s'emboite dans la fiche électrique 13 située en face envers d'un panneau adjacent, la fiche électrique 13 faisant alors office de couvercle du boitier de connexion 11.

## Revendications

1. Boitier de connexion électrique (11) pour panneau de parement extérieur de bâtiment porteur d'au moins un module photovoltaïque comprenant un pôle électrique à l'une de ses extrémités longitudinales et un pôle électrique de polarité inverse à l'autre extrémité, le boitier de connexion comprenant :
- un fond (15),
- une paroi latérale (16) entourant le fond et s'étendant perpendiculairement à celui-ci, la paroi latérale comprenant, sur sa face externe, un rebord périphérique (17) destiné au maintien du boitier en place dans une ouverture pratiquée dans le panneau de parement extérieur,
- une sortie de câble (21), située dans la partie du boitier de connexion se trouvant au-dessus du rebord périphérique, destinée à relier le boitier de connexion électrique à un pôle électrique du module photovoltaïque porté par le panneau,
- une cavité interne (22) délimitée par le fond et la paroi, comprenant une borne électrique (23) d'axe perpendiculaire au fond, destinée au branchement d'une fiche électrique (13) située en face envers d'un panneau de parement extérieur adjacent,
- un interrupteur électrique amovible (24) reliant la borne électrique (23) à la sortie de câble (21) et situé sur la paroi latérale du boitier de connexion.

2. Boitier de connexion électrique selon la revendication 1 pour lequel le rebord périphérique est situé dans le tiers supérieur de la paroi latérale (16).

3. Boitier de connexion électrique selon l'une des revendications 1 ou 2 pour lequel le rebord périphérique est continu sur la périphérie de la paroi latérale (16).

4. Boitier de connexion électrique selon l'une des revendications 1 à 3 pour lequel la sortie de câble (21) est adjacente au rebord périphérique (17).

5. Boitier de connexion électrique selon l'une des revendications 1 à 4 pour lequel la sortie de câble (21) se présente sous la forme d'une borne électrique apte au branchement d'une fiche électrique.

6. Boitier de connexion électrique selon l'une des revendications 1 à 5 pour lequel l'interrupteur électrique amovible (24) comprend un conducteur électrique (25) muni de deux extrémités (26), chacune des extrémités (26) étant en contact électrique avec respectivement la borne électrique (23) et la sortie de câble (21).

7. Boitier de connexion électrique selon l'une des revendications 1 à 6 pour lequel la borne électrique (23) et la sortie de câble (21) sont chacune en contact électrique avec une prise électrique (27), les deux prises électriques (27) étant rendues accessibles par le retrait de l'interrupteur électrique amovible (24) du boitier de connexion.

8. Panneau de parement extérieur de bâtiment comprenant :
- un bord transversal supérieur (4) comprenant une zone de recouvrement supérieure (41) destinée à être recouverte par un panneau (1) adjacent,
- un bord transversal inférieur (5) comprenant une zone de recouvrement inférieure (51) destinée à recouvrir un panneau (1) adjacent,
- une partie centrale (6), reliant les bords transversaux, recouverte d'au moins un module photovoltaïque (7) comprenant un pôle électrique à l'une de ses extrémités longitudinales et un pôle électrique de polarité inverse à l'autre extrémité,
- un percement (10) situé dans la zone de recouvrement inférieure (51) et traversé par un câble électrique (14) reliant l'un des deux pôles électriques du module photovoltaïque à une fiche électrique (13) située en face envers du panneau dans la zone de recouvrement inférieure (51),
- une ouverture (8), située dans la zone de recouvrement supérieure (41), dans laquelle est inséré un boitier de connexion électrique (11), selon la revendication 1, relié à l'autre pôle électrique du module photovoltaïque par l'intermédiaire d'un câble électrique (12).

9. Panneau de parement extérieur de bâtiment selon la revendication 8 comprenant en outre un renfoncement (9) entourant l'ouverture (8).

## Patentansprüche

1. Gehäuse zur elektrischen Verbindung (11) für ein Außenverkleidungspaneel für ein Gebäude, welches zumindest ein Photovoltaikmodul trägt, welches einen elektrischen Pol am einen seiner Längsenden und einen elektrischen Pol mit inverser Polarität am anderen Ende aufweist, wobei das Gehäuse zur Verbindung aufweist:
- einen Boden (15),
- eine Seitenwand (16), welche den Boden umgibt, und welche sich senkreckt zu diesem erstreckt, wobei die Seitenwand aufweist, an ihrer Außenfläche, einen Umfangsrand (17), welcher dazu bestimmt ist, das Gehäuse in einer Öffnung, welche im Außenverkleidungspaneel ausgebildet ist, am Platz zu halten,
- einen Kabelausgang (21), welcher in dem Teil des Gehäuses zur Verbindung angeordnet ist, welcher sich unterhalb des Umfangsrandes befindet, und welcher dazu bestimmt ist, das Gehäuse zur elektrischen Verbindung mit einem elektrischen Pol des Photovoltaikmoduls, welches mittels des Paneels getragen wird, zu verbinden,
- eine Innenkavität (22), welche mittels des Bodens und der Wand begrenzt wird, und welche eine elektrische Klemme (23) mit einer zum Boden senkrechten Achse aufweist, welche zum Anschluss eines elektrischen Steckers (13) bestimmt ist, welcher an der Rückseitenfläche eines angrenzenden Außenverkleidungspaneels angeordnet ist,
- einen lösbaren elektrischen Unterbrecher (24), welcher die elektrische Klemme (23) mit dem Kabelausgang (21) verbindet, und welcher an der Seitenwand des Gehäuses zur Verbindung angeordnet ist.

2. Gehäuse zur elektrischen Verbindung gemäß Anspruch 1, wobei der Umfangsrand im oberen Drittel der Seitenwand (16) angeordnet ist.

3. Gehäuse zur elektrischen Verbindung gemäß einem der Ansprüche 1 oder 2, wobei der Umfangsrand kontinuierlich am Umfang der Seitenwand (16) ist.

4. Gehäuse zur elektrischen Verbindung gemäß einem der Ansprüche 1 bis 3, wobei der Kabelausgang (21) angrenzend an den Umfangsrand (17) ist.

5. Gehäuse zur elektrischen Verbindung gemäß einem der Ansprüche 1 bis 4, wobei der Kabelausgang (21) die Form einer elektrischen Klemme hat, welche zum Anschluss eines elektrischen Steckers geeignet ist.

6. Gehäuse zur elektrischen Verbindung gemäß einem der Ansprüche 1 bis 5, wobei der lösbare elektrische Unterbrecher (24) einen elektrischen Leiter (25) aufweist, welcher mit zwei Enden (26) bereitgestellt ist, wobei jedes der Enden (26) in zugeordneter Weise in elektrischem Kontakt mit der elektrischen Klemme (23) und dem Kabelausgang (21) ist.

7. Gehäuse zur elektrischen Verbindung gemäß einem der Ansprüche 1 bis 6, wobei die elektrische Klemme (23) und der Kabelausgang (21) jeweils in elektrischem Kontakt mit einer elektrischen Buchse (27) sind, wobei die beiden elektrischen Buchsen (27) mittels des Entfernens des lösbaren elektrischen Unterbrechers (24) des Gehäuses zur elektrischen Verbindung zugänglich gemacht werden.

8. Außenverkleidungspaneel für ein Gebäude, welches aufweist:
- einen oberen Querrand (4), welcher eine obere Überdeckungszone (41) aufweist, welche dazu bestimmt ist, mittels eines angrenzenden Paneels (1) überdeckt zu werden,
- einen unteren Querrand (5), welcher eine untere Überdeckungszone (51) aufweist, welche dazu bestimmt ist, ein angrenzendes Paneel (1) zu überdecken,
- einen zentralen Abschnitt (6), welcher die Querränder verbindet, und welcher von zumindest einem Photovoltaikmodul (7) überdeckt wird, welches einen elektrischen Pol am einen seiner Längsenden und einen elektrischen Pol mit inverser Polarität am anderen Ende aufweist,
- einen Durchlass (10), welcher in der unteren Überdeckungszone (51) angeordnet ist, und welcher von einem elektrischen Kabel (14) durchquert wird, welches den einen der beiden elektrischen Pole des Photovoltaikmoduls mit einem elektrischen Stecker (13) verbindet, welcher an der Rückseitenfläche des Paneels in der unteren Überdeckungszone (51) angeordnet ist,
- eine Öffnung (8), welche in der oberen Überdeckungszone (41) angeordnet ist, und in welche ein Gehäuse zur elektrischen Verbindung (11) gemäß Anspruch 1 eingeführt ist, welches mit dem anderen elektrischen Pol des Photovoltaikmoduls mittels eines elektrischen Kabels (12) verbunden ist.

9. Außenverkleidungspaneel für ein Gebäude gemäß Anspruch 8, welches ferner eine Verstärkung (9) aufweist, welche die Öffnung (8) umgibt.

## Claims

1. Electrical junction box (11) for an exterior cladding panel of a building bearing at least one photovoltaic module comprising an electrical pole at one of its longitudinal ends and an electrical pole of inverse polarity at the other end, the junction box comprising:
- a base (15),
- a lateral wall (16) surrounding the base and extending perpendicularly to the latter, the lateral wall comprising, on its external face, a peripheral flange (17) intended to maintain the junction box in place in an opening provided in the exterior cladding panel,
- a cable outlet (21), situated in the part of the junction box situated above the peripheral flange, intended to connect the electrical junction box to an electrical pole of the photovoltaic module borne by the panel,
- an internal cavity (22) delimited by the base and the wall, comprising an electrical terminal (23) of axis perpendicular to the base, intended for the connection of an electrical plug (13) situated on the reverse side of an adjacent exterior cladding panel,
- a removable electrical switch (24) connecting the electrical terminal (23) to the cable outlet (21) and situated on the lateral wall of the junction box.

2. Electrical junction box according to claim 1, for which the peripheral flange is situated in the upper third of the lateral wall (16).

3. Electrical junction box according to one of claims 1 or 2, for which the peripheral flange is continued over the periphery of the lateral wall (16).

4. Electrical junction box according to one of claims 1 to 3, for which the cable outlet (21) is adjacent to the peripheral flange (17).

5. Electrical junction box according to one of claims 1 to 4, for which the cable outlet (21) has the form of an electrical terminal which is suitable for connection of an electrical plug.

6. Electrical junction box according to one of claims 1 to 5, for which the removable electrical switch (24) comprises an electrical conductor (25) fitted with two ends (26), each of the ends (26) being in electrical contact with respectively the electrical terminal (23) and the cable outlet (21).

7. Electrical junction box according to one of claims 1 to 6, for which the electrical terminal (23) and the cable outlet (21) are each in electrical contact with an electrical socket (27), the two electrical sockets (27) being made accessible by the withdrawal of the removable electrical switch (24) from the junction box.

8. Exterior cladding panel of a building comprising:
- an upper transverse edge (4) comprising an upper covering zone (41) intended to be covered by an adjacent panel (1),
- a lower transverse edge (5) comprising a lower covering zone (51) intended to cover an adjacent panel (1),
- a central part (6), connecting the transverse edges, covered by at least one photovoltaic module (7) comprising an electrical pole at one of its longitudinal ends and an electrical pole of inverse polarity at the other end,
- a break-through (10) situated in the lower covering zone (51) and traversed by an electrical cable (14) connecting one of the two electrical poles of the photovoltaic module to an electrical plug (13) situated on the reverse side of the panel in the lower covering zone (51),
- an opening (8) situated in the upper covering zone (41), in which an electrical junction box (11) is inserted, according to claim 1, connected to the other electrical pole of the photovoltaic module by means of an electrical cable (12).

9. Exterior cladding panel of a building according to claim 8, comprising furthermore a reinforcement (9) surrounding the opening (8).
